# EUROPEAN PATENT SPECIFICATION

(11) **EP 4 151 394 B1**
(45) Date of publication and mention of the grant of the patent: **04.06.2025**
(21) Application number: 21382850.2
(22) Date of filing: 21.09.2021
(51) Int. Cl.: B29C 65/18, B29C 65/74

(54) **WELDING UNIT FOR AN AUTOMATIC FLEXIBLE POUCH FORMING MACHINE AND AUTOMATIC FLEXIBLE POUCH FORMING MACHINE COMPRISING THE SAME**
SCHWEISSEINHEIT FÜR EINE AUTOMATISCHE MASCHINE ZUR FORMUNG VON FLEXIBLEN BEUTELN UND AUTOMATISCHE MASCHINE ZUR FORMUNG VON FLEXIBLEN BEUTELN DAMIT
UNITÉ DE SOUDAGE DESTINÉE À UNE MACHINE AUTOMATIQUE DE FORMATION DE SACHET SOUPLE ET MACHINE AUTOMATIQUE DE FORMATION DE SACHET SOUPLE LA COMPRENANT

(43) Date of publication of application: 22.03.2023
(73) Proprietor: Mespack, S.L., 08130 Santa Perpètua de Mogoda (Barcelona) (ES)
(72) Inventor: MORRAL ROCA, José, 08140 Caldes de Montbui (ES)
(74) Representative: Juncosa Miró, Jaime

(56) References cited:
- EP-A2- 0 999 130
- EP-A2- 2 298 538

## Description

### Technical field

The present invention generally relates to the field of welding devices for an automatic container forming machine, and, in particular, to the field of welding units for an automatic flexible pouch forming machine.

The present invention also relates to the field of automatic container forming machines, and, in particular, to the field of automatic flexible pouch forming machines.

### State of the Art

Container forming machines are known in the prior art which are capable of forming containers in the form of a pouch or bag from a band of flexible heat-sealable film supplied from a reel. Some container forming machines are also capable of filling said containers with one or more products, and hermetically sealing the filled containers.

There are two main variants or types of container forming machines. Vertical type machines, in which the band of film is longitudinally cut into several strips of film and each strip of film is rolled in the form of a tube around a vertical core to form the container by heat sealing thereon, and the tube is vertically moved downwards while at the same time the containers can be filled with one or more products supplied through an inner passage of the core and finally closed by heat sealing; and horizontal type machines, in which the band of film is folded to form by heat sealing containers open at the top which are transported along a horizontal path along which the containers can be filled with one or more products and finally closed by heat sealing.

A welding unit is used in both machine types to form horizontal welds at the edges of the container by heat sealing. Each of these welding units usually comprises at least one pair of pressure and heat applicators facing one another and located on opposite sides of a container precursor made of the band of film, and driving means alternately moving said pressure and heat applicators between a release position, in which the pressure and heat applicators are separated from the container precursor, and a welding position, in which the pressure and heat applicators press the container precursor while at the same time applying heat to form a weld.

In order to increase the productivity of container forming machines, there are known in the art container forming machines, and in particular, welding units for container forming machines, that comprise a plurality of pairs of pressure and heat applicators arranged following a direction defined by the forward movement of the container precursors, so that multiple welds for a plurality of containers can be done simultaneously. Usually said plurality of pairs of pressure and heat applicators are arranged in a linear manner. However, such solution also has drawbacks, as it is required more space to install the plurality of pairs of pressure and heat applicators, thereby increasing the size of the welding unit and, consequently, the size of the container forming machine. Moreover, increasing the number of pairs of pressure and heat applicators arranged along the forward movement direction of the container precursor also may affect the requirements of the container precursor, as the forces, temperature, etc. that it has to withstand varies, and the complexity of adjusting the operating parameters of the welding unit also increases. Furthermore, increasing the number of pairs of pressure and heat applicators also increases the number of parts of the welding unit, as each pair of pressure and heat applicators is independent from the rest.

EP 0999130 A2 discloses a welding unit for an automatic flexible pouch forming machine comprising first and second pressure applicators facing one another, thereby forming a first path for a first pouch precursor made of a folded band of flexible heat-sealable film; heating means heating at least one of said first and second pressure applicators; and driving means for moving at least one of said first and second pressure applicators between a release position, in which the first and second pressure applicators are separated from the first path, and a welding position, in which the first and second pressure applicators press and apply heat on the first pouch precursor to form a weld.

### Brief description of the invention

The present invention is directed towards a welding unit for an automatic flexible pouch forming machine that increases the productivity of known welding units while providing a compact arrangement of its elements. In order to do so, according to a first aspect of the present invention, it is disclosed a welding unit for an automatic flexible pouch forming machine comprising: first and second pressure applicators facing one another, thereby forming a first path for a first pouch precursor made of a folded band of flexible heat-sealable film; heating means heating at least one of said first and second pressure applicators; and driving means, or driving mechanism, for moving at least one of said first and second pressure applicators between a release position, in which the first and second pressure applicators are separated from the first path, and a welding position, in which the pressure applicators press and apply heat on the first pouch precursor to form a weld; the welding unit further comprising: a first lateral element comprising the first pressure applicator; a central element comprising the second pressure applicator and a third pressure applicator on opposite sides thereof; a second lateral element comprising a fourth pressure applicator facing the third pressure applicator, thereby forming a second path for a second pouch precursor made of a folded band of flexible heat-sealable film; wherein the heating means also heat at least one of said third and fourth pressure applicators; and wherein at least one of said third and fourth pressure applicators are movable between a release position, in which the third and fourth pressure applicators are separated from the second path, and a welding position, in which the third and fourth pressure applicators press and apply heat on the second pouch precursor to form a weld; and wherein at least one of the third and fourth pressure applicators is operatively connected to said driving means, or driving mechanism, so that at least one of said first and second pressure applicators and at least one of said third and fourth pressure applicators, simultaneously move from the release position to the welding position, and vice versa.

The first aspect of the present invention increases the productivity of a welding unit of a certain length, as it doubles the number of welds produced by a given length of the welding unit. Moreover, compared to an alleged welding unit for a container forming machine having two container precursors arranged in parallel, said container precursors being made of a folded band of flexible heat-sealable film, and two independent pairs of pressure applicators, one pair for each container precursor, the present invention reduces the number of elements required, as some are shared between the pressure applicators, in particular, the driving means and the central element. Furthermore, as the driving means simultaneously move at least one of said first and second pressure applicators and at least one of said third and fourth pressure applicators from the release position to the welding position, and vice versa, there is no need for complex control means of the pressure applicators as it would be in the case of two independent pairs of pressure and heat applicators arranged in parallel, each pair for a corresponding container precursor.

The first aspect of the present invention is especially suitable for use in automatic flexible pouch forming machine of the horizontal type. However, is not limited to said type of automatic flexible pouch forming machines.

According to the first aspect of the present invention, the driving means may simultaneously move the first lateral element and the central element relative to the second lateral element to move the first, second, third and fourth pressure applicators from the release position to the welding position, and vice versa.

According to the first aspect of the present invention, the driving means may simultaneously move the second lateral element and the central element relative to the first lateral element to move the first, second, third and fourth pressure applicators from the release position to the welding position, and vice versa.

According to the first aspect of the present invention, the driving means may simultaneously move the first and second lateral elements relative to the central element to move the first, second, third and fourth pressure applicators from the release position to the welding position, and vice versa, that is to say, the central element may be stationary and the driving means may move the first and second lateral elements closer to the central element so that the first, second, third and fourth pressure applicators reach their welding position; and the driving means may move the first and second lateral elements away from the central element so that the first, second, third and fourth pressure applicators reach their release position.

According to the first aspect of the present invention, the first, second, third and fourth pressure applicators may be mutually aligned.

According to the first aspect of the present invention, the welding unit may further comprise at least one guiding unit for guiding the first and second pouch precursors.

According to the first aspect of the present invention, the welding unit may comprise at least one guiding unit upstream the pressure applicators; and at least one guiding unit downstream the pressure applicators.

According to the first aspect of the present invention, the first path of the first pouch precursor may be separated from the second path of the second pouch precursor by a first distance; and the guiding unit may be further configured to keep said first distance and to allow to modify at least one of said first and said second path so that they are separated by a second distance.

According to the first aspect of the present invention, the second distance may be greater than the first distance.

According to the first aspect of the present invention, the guiding unit may comprise a first roller for being placed in contact and guiding the first pouch precursor and a second roller for being placed in contact and guiding the second pouch precursor, each roller defining a longitudinal axis parallel to the corresponding pouch precursor.

According to the first aspect of the present invention, the guiding unit may further comprise a third roller for being placed in contact and guiding the first pouch precursor, defining a longitudinal axis parallel to the first pouch precursor and being arranged pivotally about a pivot axis parallel to the longitudinal axis of the first roller; and the guiding unit may further comprise a fourth roller for being placed in contact and guiding the second pouch precursor, defining a longitudinal axis parallel to the second pouch precursor and being arranged pivotally about a pivot axis parallel to the longitudinal axis of the second roller.

According to the first aspect of the present invention, the welding unit may comprise at least a second set of first, second, third and fourth pressure applicators.

According to the first aspect of the present invention, the heating means may comprise one or more sonotrodes.

According to the first aspect of the present invention, the heating means may comprise one or more electrical resistors.

According to the first aspect of the present invention, at least one of the first and second pressure applicators may have projections configured to form a weld with a predetermined format and/or shape in contact with the first pouch precursor.

According to the first aspect of the present invention, at least one of the third and fourth pressure applicators may have projections configured to form a weld with a predetermined format and/or shape in contact with the first pouch precursor.

According to a second aspect of the present invention, it is disclosed an automatic flexible pouch forming machine comprising a welding unit according to the first aspect of the present invention.

According to the second aspect of the present invention, the automatic flexible pouch forming machine may further comprise: a first unwinding unit for unwinding a first band of a flexible heat-sealable film in a first forward movement direction; a first folding unit of the first band configured for folding said band along at least one first folding line parallel to the first forward movement direction, at least two portions of the first band being arranged on opposite sides of said at least one first folding line and the same face of the first band being arranged opposite one another; a second unwinding unit for unwinding a second band of a flexible heat-sealable film in a second forward movement direction; and a second folding unit of the second band configured for folding said band along at least one second folding line parallel to the second forward movement direction, at least two portions of the second band being arranged on opposite sides of said at least one second folding line and the same face of the second band being arranged opposite one another.

According to the second aspect of the present invention, the automatic flexible pouch forming machine may further comprise at least one cutting unit for separating portions making up flexible pouches from the first and second bands.

It will be understood that references to geometric position, such as parallel, perpendicular, tangent, etc. allow deviations up to ± 5° from the theoretical position defined by this nomenclature.

It will also be understood that any range of values given may not be optimal in extreme values and may require adaptations of the invention to these extreme values are applicable, such adaptations being within reach of a skilled person.

Other features of the invention appear from the following detailed description of an embodiment.

### Brief description of the Figures

The foregoing and other advantages and features will be more fully understood from the following detailed description of an embodiment with reference to the accompanying drawings, to be taken in an illustrative and non-limitative manner, in which:
FIG. 1 shows a perspective view of a first exemplary embodiment of a welding unit for an automatic flexible pouch forming machine according to the present invention.
FIG. 2 shows a perspective view of a second exemplary embodiment of a welding unit for an automatic flexible pouch forming machine according to the present invention.
FIG. 3 shows a perspective view of a third exemplary embodiment of a welding unit for an automatic flexible pouch forming machine according to the present invention.
FIG. 4 shows a top view of the third exemplary embodiment of a welding unit shown in FIG. 3.
FIG. 5 shows a front view of the third exemplary embodiment of a welding unit shown in FIGS. 3 and 4.
FIG. 6 shows a side view of the third exemplary embodiment of a welding unit shown in FIGS. 3 to 5.

### Detailed description of an embodiment

The foregoing and other advantages and features will be more fully understood from the following detailed description of an embodiment with reference to the accompanying drawings, to be taken in an illustrative and not limitative way.

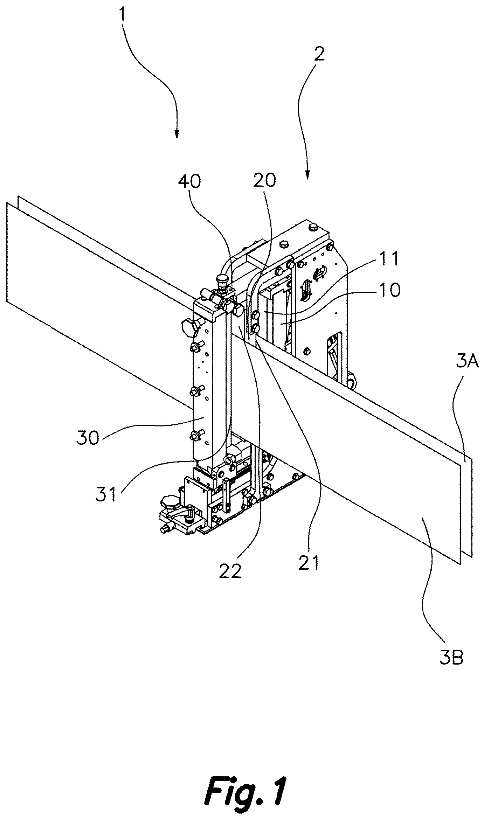

FIG. 1 shows a perspective view of a first exemplary embodiment of a welding unit for an automatic flexible pouch forming machine according to the present invention. The welding unit 1 of this first exemplary embodiment comprises a first lateral element 10, a central element 20 and a second lateral element 30. Said first lateral element 10 comprises a first pressure applicator 11 and said central element 20 comprises a second pressure applicator 21, said first and second pressure applicators 11, 21 defining a path for a first pouch precursor 3A made of a folded band of flexible heat-sealable film. The central element 20 further comprises a third pressure applicator 22 and the second lateral element 30 comprises a fourth pressure applicator 31, said third and fourth pressure applicators 22, 31 defining a path for a second pouch precursor 3B made of a folded band of flexible heat-sealable film.

The welding unit 1 further comprises a heating means for heating at least one of said first and second pressure applicators 11, 21 and at least one of said third and fourth pressure applicators 22, 31. Said heating means can comprise, for example, one or more electrical resistors and/or one or more sonotrodes.

The welding unit 1 also comprises driving means 40, or driving mechanism, for moving the first and second pressure applicators 11, 21 from a release position, in which the first and second pressure applicators 11, 21 are separated from the path for the first pouch precursor 3A, and a welding position, in which first and second pressure applicators 11, 21 press and apply heat on the first pouch precursor 3A to form at least a weld. Said driving means 40, or driving mechanism, are also operatively connected to the third and fourth pressure applicators 22, 31 so that the third and fourth pressure applicators 22, 31 are movable between a release position, in which the third and fourth pressure applicators 22, 31 are separated from the path for the second pouch precursor 3B, and a welding position, in which the third and fourth pressure applicators 22, 31 press and apply heat on the second pouch precursor 3B to form at least a weld. The driving mechanism or driving means 40 are operatively connected to the first, second, third and fourth pressure applicators 11, 21, 22, 31 in such a way that at least one of said first and second pressure applicators 11, 21 and at least one of said third and fourth pressure applicators 22, 31 simultaneously move from the release position to the welding position, and vice versa.

The second and third pressure applicators 21, 22 are located opposite one another on opposite sides of the central element 20.

In the first exemplary embodiment shown, the first, second, third and fourth pressure applicators 11, 21, 22, 31 are mutually aligned.

In the first exemplary embodiment, the driving means 40, or driving mechanism, simultaneously move the first and second lateral elements 10, 30 relative to the central element 20 to move the first, second, third and fourth pressure applicators 11, 21, 22, 31 from the release position to the welding position, and vice versa. That is to say, in this first exemplary embodiment, the central element 20 is stationary and the first and second lateral elements 10, 30 move closer to the central element 20 to move the first, second, third and fourth pressure applicators 11, 21, 22, 31 from the release position to the welding position; and the first and second lateral elements 10, 30 move away from the central element 20 to move the first, second, third and fourth pressure applicators 11, 21, 22, 31 from the welding position to the release position. However, in other embodiments of the present invention none of the first lateral element 10, the central element 20 and the second lateral element 20 may be stationary, i.e., the first lateral element 10, the central element 20 and the second lateral element may all be movable.

It is also possible, in other embodiments, that the driving mechanism or driving means 40 may simultaneously move the first lateral element 10 and the central element 20 relative to the second lateral element 30 to move the first, second, third and fourth pressure applicators 11, 21, 22, 31 from the release position to the welding position, and vice versa. That is to say, the second lateral element 30 may be stationary and the first lateral element 10 and the central element 20 may move closer and away from said second lateral element 30.

In other embodiments of the present invention, the driving mechanism or driving means 40 may simultaneously move the second lateral element 20 and the central element 20 relative to the first lateral element 10 to move the first, second, third and fourth pressure applicators 11, 21, 22, 31 from the release position to the welding position, and vice versa. That is to say, the first lateral element 10 may be stationary and the central element 20 and the second lateral element 30 may move closer and away from said first lateral element 10.

The first lateral element 10, the central element 20, the second lateral element 30, the driving mechanism or driving means 40, together with the first, second, third and fourth pressure applicators 11, 21, 22, 31 define a welding assembly 2.

In the present invention, productivity of the welding unit 1 is doubled, as it can perform a weld simultaneously on the first pouch precursor 3A and on the second pouch precursor 3B, without doubling the components of a known welding unit, as in the present invention some elements are shared. In particular, in the present invention the driving means 40 and the central element 20, which comprises the second and third pressure applicators 21,22, are shared. Moreover, in the exemplary embodiment shown, the driving means 40 mechanically connect and drive the first and second lateral elements 10, 30 (as has been stated hereinabove, in the first exemplary embodiment the central element 20 is stationary), thereby eliminating the need of a complex control unit that controls and coordinate the first and second applicators 11, 21, and the third and fourth pressure applicators 22, 31.

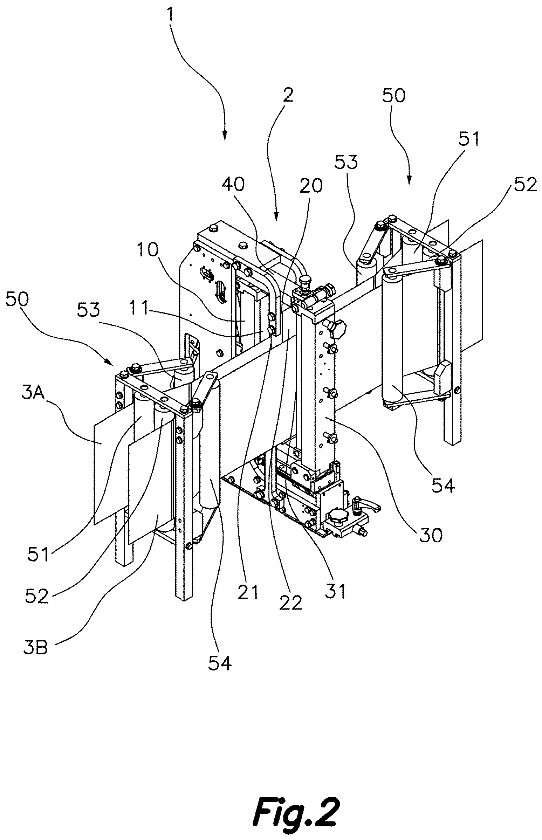

FIG. 2 shows a perspective view of a second exemplary embodiment of a welding unit 1 for an automatic flexible pouch forming machine according to the present invention. Compared to the first exemplary embodiment shown in FIG. 1, this second exemplary embodiment further comprises a guiding unit 50 upstream the first, second, third and fourth pressure applicators 11, 21, 22, 31 and a further guiding unit 50 downstream said first, second, third and fourth pressure applicators 11, 21, 22, 31. It can also be stated that the welding unit 1 of the second exemplary embodiment comprises a guiding 50 upstream the welding assembly 2 and a further guiding unit 50 downstream said welding assembly 2.

In this second exemplary embodiment, each guiding unit 50 comprises a first roller 51 for being placed in contact and guiding the first pouch precursor 3A and a second roller 52 for being placed in contact and guiding the second pouch precursor 3B, said first and second rollers 51, 52 defining a longitudinal axis parallel to the corresponding pouch precursor 3A, 3B.

Each guiding unit 50 of this second exemplary embodiment further comprise a third roller 53 for being placed in contact and guiding the first pouch precursor 3A and a fourth roller 54 for being placed in contact and guiding the second pouch precursor 3B. Said third roller 53 defines a longitudinal axis parallel to the first pouch precursor 3A, i.e. the first path for the first pouch precursor 3A, and is arranged pivotally about a pivot axis parallel to the longitudinal axis of the first roller 51. Said fourth roller 54 defines a longitudinal axis parallel to the second pouch precursor 3B, i.e., the second path for the second pouch precursor 3B, and is arranged pivotally about a pivot axis parallel to the longitudinal axis of the second roller 52.

In other embodiments, one or more guiding units 50 may differ than the one described above. In particular, it is possible that in other embodiments one or more guiding units lack of the third and fourth rollers 53, 54.

In other embodiments of the present invention, the guiding unit 50 upstream the first, second, third and fourth pressure applicators 11, 21, 22, 31 may be different than the guiding unit downstream the first, second, third and fourth pressure applicators 11, 21, 22, 31.

In this first exemplary embodiment, the first path of the first pouch precursor 3A is separated by a first distance from the second path of the second pouch precursor 3B and the guiding unit is configured to modify at least one of said first and second paths so that they are separated by a second distance. Said second distance is preferably greater than the first one. By varying the separation or distance between the first and the second path of the first and second pouch precursors 3A, 3B it is possible to avoid, or at least reduce, the risk of damaging the pouch precursors 3A, 3B when the welding unit 1 and/or the automatic flexible pouch forming machine is starting up or being stopped, as it allows to move the pouch precursors 3A, 3B away from the heating means.

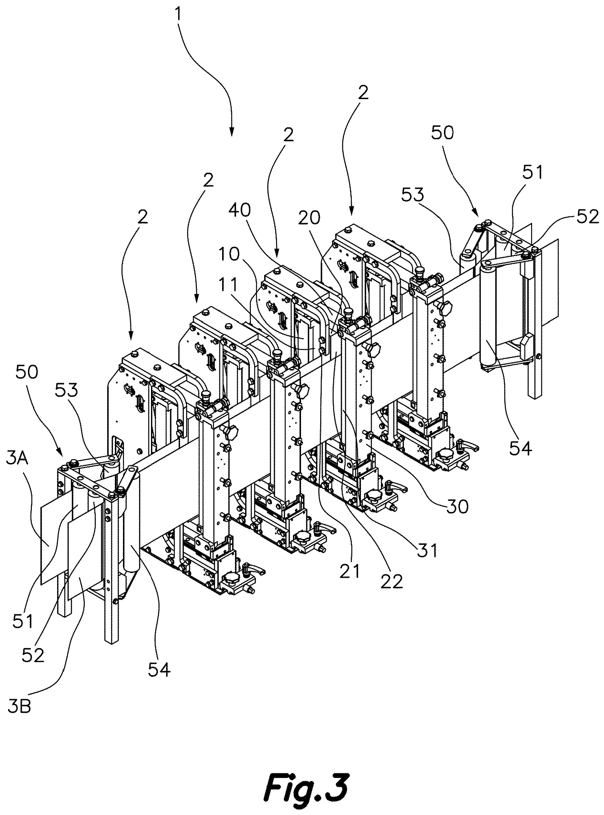

FIG. 3 shows a perspective view of a third exemplary embodiment of a welding unit 1 for an automatic flexible pouch forming machine according to the present invention. This third exemplary embodiment comprises four sets of first lateral elements 10, central elements 20 and second lateral elements 30, with the corresponding first, second, third and fourth pressure applicators 11, 21, 22, 31 and driving means 40. That is to say, this third exemplary embodiment comprises four welding assemblies 2.

By increasing the number of welding assemblies 2, the number of operations or welds performed on the first and second pouch precursors 3A, 3B also increases for a given period of time, as the plurality of welding assemblies 2 allow to perform multiple operations on a simultaneous or substantially simultaneous manner.

In this third exemplary embodiment each welding assembly 2 performs a different welding operation, but in other embodiments with a plurality of welding assemblies 2, each welding assembly 2 can perform the same operation, so that a certain operation is performed n times, where n is the number of welding assemblies 2, simultaneously.

For clarity purposes, in FIG. 3 the reference numerals of the first lateral element 10, the central element 20, the second lateral element 30, the first, second, third and fourth pressure applicators 11, 21, 22, 31 and the driving means 40 of only one welding assembly 2 have been depicted. However, all welding assemblies 2 of this third exemplary embodiment share the same parts and the above explanation is also applicable to them.

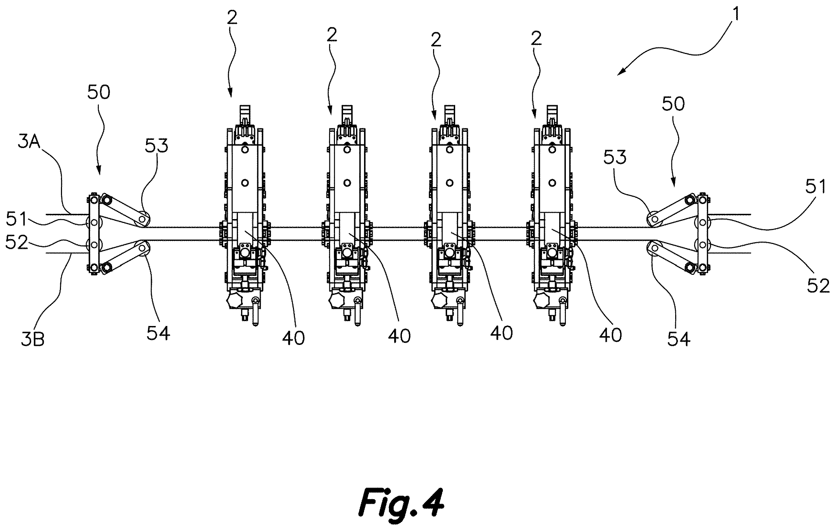

FIGS. 4 to 6 show a top, a front and a side view of the third exemplary embodiment of a welding unit 1 shown in FIG. 3.

As can be clearly seen in FIG. 4, in this third exemplary embodiment of a welding unit 1 its components or elements are arranged in a linear manner, as in this embodiment the first and second paths for a first and second pouch precursors 3A, 3B are linear. However, in other embodiments said paths for the first and second pouch precursors 3A, 3B may be non-linear, for example, curved, in which case the elements of the welding unit 1 are also arranged in a non-linear manner, adapted to the paths of the first and second pouch precursors 3A, 3B.

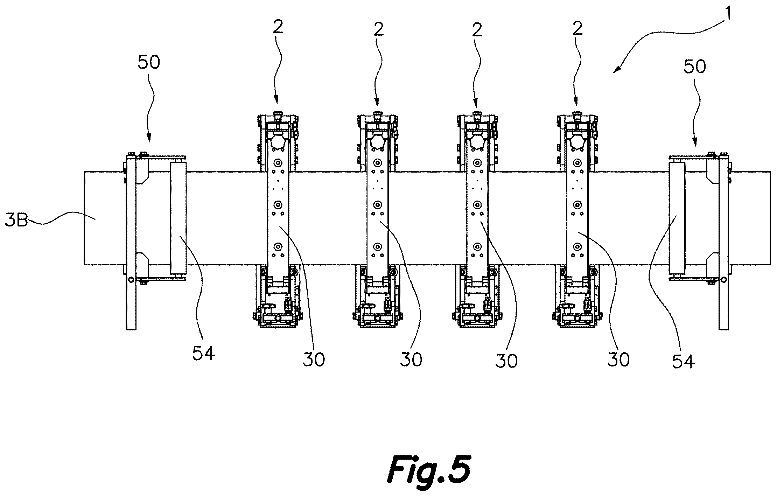

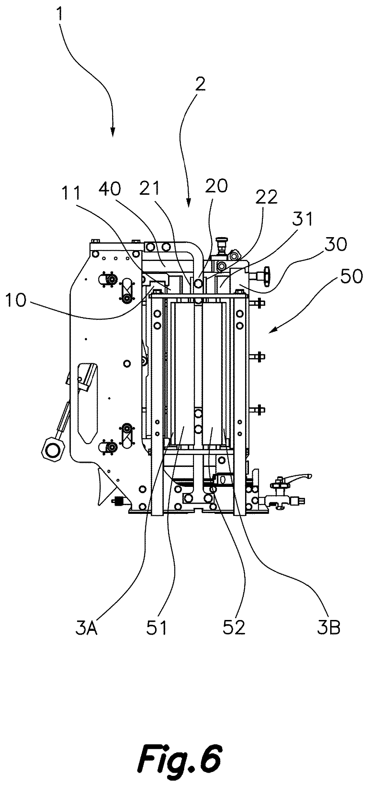

FIGS. 5 and 6 show how the first and second pouch precursors 3A, 3B are surrounded by the welding assemblies 2. In particular, the first pouch precursor 3A is surrounded by the first pressure applicator 11 of the first lateral element 10, the second pressure applicator 21 of the central element 20, part of the driving means 40 and the lower body of the welding assembly 2. In a similar manner, the second pouch precursor 3B is surrounded by the third pressure applicator 22 of the central element 20, the fourth pressure applicator 31 of the second lateral element 30, part of the driving means 40 and the lower body of the welding assembly 2.

Although it is not shown in the drawings, a second aspect of the present invention comprises an automatic flexible pouch forming machine comprising a welding unit 1 as previously described.

In certain embodiments, the automatic flexible pouch forming machine can comprise a first unwinding unit for unwinding a first band of a flexible heat-sealable film in a first forward movement direction; a first folding unit of the first band configured for folding said band along at least one first folding line parallel to the first forward movement direction, at least two portions of the first band being arranged on opposite sides of said at least one first folding line and the same face of the first band being arranged opposite one another; a second unwinding unit for unwinding a second band of a flexible heat-sealable film in a second forward movement direction; and a second folding unit of the second band configured for folding said band along at least one second folding line parallel to the second forward movement direction, at least two portions of the second band being arranged on opposite sides of said at least one second folding line and the same face of the second band being arranged opposite one another

It will be understood that various parts of one embodiment of the invention can be freely combined with parts described in other embodiments, even being said combination not explicitly described, provided that such combination is within the scope of the claims and that there is no harm in such combination.

## Claims

1. Welding unit (1) for an automatic flexible pouch forming machine comprising:
- first and second pressure applicators (11, 21) facing one another, thereby forming a first path for a first pouch precursor (3A) made of a folded band of flexible heat-sealable film,
- heating means heating at least one of said first and second pressure applicators (11, 21), and
- driving means (40) for moving at least one of said first and second pressure applicators (11, 21) between a release position, in which the first and second pressure applicators (11, 21) are separated from the first path, and a welding position, in which the first and second pressure applicators (11, 21) press and apply heat on the first pouch precursor (3A) to form a weld,
**characterized in that** it comprises:
a first lateral element (10) comprising the first pressure applicator (11);
a central element (20) comprising the second pressure applicator (21) and a third pressure applicator (22) on opposite sides thereof;
a second lateral (30) element comprising a fourth pressure applicator (31) facing the third pressure applicator (22), thereby forming a second path for a second pouch precursor (3B) made of a folded band of flexible heat-sealable film;
wherein the heating means also heat at least one of said third and fourth pressure applicators (22, 31); and
wherein at least one of said third and fourth pressure applicators (22, 31) are movable between a release position, in which the third and fourth pressure applicators (22, 31) are separated from the second path, and a welding position, in which the third and fourth pressure applicators (22, 31) press and apply heat on the second pouch precursor (3B) to form a weld; and wherein at least one of the third and fourth pressure applicators (22, 31) is operatively connected to said driving means (40), so that at least one of said first and second pressure applicators (11, 21) and at least one of said third and fourth pressure applicators (22, 31), simultaneously move from the release position to the welding position, and vice versa.

2. Welding unit (1), according to claim 1, **characterized in that** the driving means (40) simultaneously move the first lateral element (10) and the central element (20) relative to the second lateral element (30) to move the first, second, third and fourth pressure applicators (11, 21, 22, 31) from the release position to the welding position, and vice versa.

3. Welding unit (1), according to claim 1, **characterized in that** the driving means (40) simultaneously move the second lateral element (20) and the central element (20) relative to the first lateral element (10) to move the first, second, third and fourth pressure applicators (11, 21, 22, 31) from the release position to the welding position, and vice versa.

4. Welding unit (1), according to claim 1, **characterized in that** the driving means simultaneously move the first and second lateral elements (10, 30) relative to the central element (20) to move the first, second, third and fourth pressure applicators (11, 21, 22, 31) from the release position to the welding position, and vice versa.

5. Welding unit (1), according to any one the preceding claims, **characterized in that** the first, second, third and fourth pressure applicators (11, 21, 22, 31) are mutually aligned.

6. Welding unit (1), according to any one of the preceding claims, **characterized in that** it further comprises at least one guiding unit (50) for guiding the first and second pouch precursors (3A, 3B).

7. Welding unit (1), according to claim 6, **characterized in that** it comprises at least one guiding unit (50) upstream the pressure applicators (11, 21, 22, 31); and at least one guiding unit (50) downstream the pressure applicators (11, 21, 22, 31).

8. Welding unit (1), according to claim 6 or 7, wherein the first path of the first pouch precursor (3A) is separated from the second path of the second pouch precursor (3B) by a first distance; and wherein the guiding unit (50) is further configured to keep said first distance and allowing to modify at least one of said first and said second paths so that they are separated by a second distance.

9. Welding unit (1), according to claim 8, wherein the second distance is greater than the first distance.

10. Welding unit (1), according to any one of claims 7 to 9, **characterized in that** the guiding unit (50) comprises a first roller (51) for being placed in contact and guiding the first pouch precursor (3A) and a second roller (52) for being placed in contact and guiding the second pouch precursor (3B), each roller (51, 52) defining a longitudinal axis parallel to the corresponding pouch precursor (3A, 3B).

11. Welding unit (1), according to claim 10, **characterized in that** the guiding unit (50) further comprises a third roller (53) for being placed in contact and guiding the first pouch precursor (3A), defining a longitudinal axis parallel to the first pouch precursor (3A), and being arranged pivotally about a pivot axis parallel to the longitudinal axis of the first roller (51).
and **in that** the guiding unit (50) further comprises a fourth roller (54) for being placed in contact and guiding the second pouch precursor (3B), defining a longitudinal axis parallel to the second pouch precursor (3B), and being arranged pivotally about a pivot axis parallel to the longitudinal axis of the second roller (52).

12. Welding unit (1), according to any one of the preceding claims, **characterized in that** it comprises at least a second set of first, second, third and fourth pressure applicators (11, 21, 22, 31).

13. Automatic flexible pouch forming machine comprising a welding unit (1) according to any one of claims 1 to 12.

14. Automatic flexible pouch forming machine, according to claim 13, **characterized in that** it further comprises:
a first unwinding unit for unwinding a first band of a flexible heat-sealable film in a first forward movement direction;
a first folding unit of the first band configured for folding said band along at least one first folding line parallel to the first forward movement direction, at least two portions of the first band being arranged on opposite sides of said at least one first folding line and the same face of the first band being arranged opposite one another;
a second unwinding unit for unwinding a second band of a flexible heat-sealable film in a second forward movement direction; and
a second folding unit of the second band configured for folding said band along at least one second folding line parallel to the second forward movement direction, at least two portions of the second band being arranged on opposite sides of said at least one second folding line and the same face of the second band being arranged opposite one another.

15. Automatic flexible pouch forming machine, according to claim 14, **characterized in that** it further comprises at least one cutting unit for separating portions making up flexible pouches from the first and second bands.

## Patentansprüche

1. Schweißeinheit (1) für eine automatische Maschine zur Formung von flexiblen Beuteln, umfassend:
- erste und zweite Druckausübungsvorrichtungen (11, 21), die einander zugewandt sind und dadurch einen ersten Pfad für einen ersten Beutelvorläufer (3A) bilden, der aus einem gefalteten Band aus flexiblen, heißsiegelfähigen Film hergestellt ist,
- Heizmittel, die mindestens eine von der ersten und zweiten Druckausübungsvorrichtung (11, 21) heizen, und
- Antriebsmittel (40) zum Bewegen mindestens einer von der ersten und zweiten Druckausübungsvorrichtung (11, 21) zwischen einer Freigabeposition, in der die erste und zweite Druckausübungsvorrichtung (11, 21) von dem ersten Pfad getrennt sind, und einer Schweißposition, in der die erste und zweite Druckausübungsvorrichtung (11, 21) auf den ersten Beutelvorläufer (3A) drücken und Wärme darauf anwenden, um eine Schweißnaht zu bilden,
**dadurch gekennzeichnet, dass** sie Folgendes umfasst:
ein erstes seitliches Element (10), umfassend die erste Druckausübungsvorrichtung (11);
ein zentrales Element (20), umfassend die zweite Druckausübungsvorrichtung (21) und eine dritte Druckausübungsvorrichtung (22) auf gegenüberliegenden Seiten davon;
ein zweites seitliches Element (30), umfassend eine vierte Druckausübungsvorrichtung (31), die der dritten Druckausübungsvorrichtung (22) zugewandt ist, wodurch ein zweiter Pfad für einen zweiten Beutelvorläufer (3B) gebildet wird, der aus einem gefalteten Band aus flexiblem, heißsiegelfähigem Film hergestellt ist;
wobei die Heizmittel auch mindestens eine von der dritten und vierten Druckausübungsvorrichtung (22, 31) heizen; und
wobei mindestens eine von der dritten und vierten Druckausübungsvorrichtung (22, 31) zwischen einer Freigabeposition, in der die dritte und vierte Druckausübungsvorrichtung (22, 31) von dem zweiten Pfad getrennt sind, und einer Schweißposition beweglich ist, in der die dritte und vierte Druckausübungsvorrichtung (22, 31) auf den zweiten Beutelvorläufer (3B) drücken und Wärme darauf anwenden, um eine Schweißnaht zu bilden;
und wobei mindestens eine von der dritten und vierten Druckausübungsvorrichtung (22, 31) betriebsmäßig mit den Antriebsmitteln (40) verbunden ist, so dass mindestens eine von der ersten und zweiten Druckausübungsvorrichtung (11, 21) und mindestens eine von der dritten und vierten Druckausübungsvorrichtung (22, 31) sich gleichzeitig von der Freigabeposition zur Schweißposition und umgekehrt bewegen.

2. Schweißeinheit (1) nach Anspruch 1, **dadurch gekennzeichnet, dass** die Antriebsmittel (40) gleichzeitig das erste seitliche Element (10) und das zentrale Element (20) relativ zum zweiten seitlichen Element (30) bewegen, um die erste, zweite, dritte und vierte Druckausübungsvorrichtung (11, 21, 22, 31) von der Freigabeposition in die Schweißposition und umgekehrt zu bewegen.

3. Schweißeinheit (1) nach Anspruch 1, **dadurch gekennzeichnet, dass** die Antriebsmittel (40) gleichzeitig das zweite seitliche Element (20) und das zentrale Element (20) relativ zum ersten seitlichen Element (10) bewegen, um die erste, zweite, dritte und vierte Druckausübungsvorrichtung (11, 21, 22, 31) von der Freigabeposition in die Schweißposition und umgekehrt zu bewegen.

4. Schweißeinheit (1) nach Anspruch 1, **dadurch gekennzeichnet, dass** die Antriebsmittel gleichzeitig das erste und zweite seitliche Element (10, 30) relativ zum zentralen Element (20) bewegen, um die erste, zweite, dritte und vierte Druckausübungsvorrichtung (11, 21, 22, 31) von der Freigabeposition in die Schweißposition und umgekehrt zu bewegen.

5. Schweißeinheit (1) nach einem der vorhergehenden Ansprüche, **dadurch gekennzeichnet, dass** die erste, zweite, dritte und vierte Druckausübungsvorrichtung (11, 21, 22, 31) gegenseitig ausgerichtet sind.

6. Schweißeinheit (1) nach einem der vorhergehenden Ansprüche, **dadurch gekennzeichnet, dass** sie ferner mindestens eine Führungseinheit (50) zum Führen des ersten und zweiten Beutelvorläufers (3A, 3B) umfasst.

7. Schweißeinheit (1) nach Anspruch 6, **dadurch gekennzeichnet, dass** sie mindestens eine Führungseinheit (50) stromaufwärts der Druckausübungsvorrichtungen (11, 21, 22, 31) und mindestens eine Führungseinheit (50) stromabwärts der Druckausübungsvorrichtungen (11, 21, 22, 31) umfasst.

8. Schweißeinheit (1) nach Anspruch 6 oder 7, wobei der erste Pfad des ersten Beutelvorläufers (3A) von dem zweiten Pfad des zweiten Beutelvorläufers (3B) durch einen ersten Abstand getrennt ist; und wobei die Führungseinheit (50) ferner dazu konfiguriert ist, den ersten Abstand beizubehalten und es zu ermöglichen, mindestens einen von dem ersten und dem zweiten Pfad so zu modifizieren, dass sie durch einen zweiten Abstand getrennt sind.

9. Schweißeinheit (1) nach Anspruch 8, wobei der zweite Abstand größer ist als der erste Abstand.

10. Schweißeinheit (1) nach einem der Ansprüche 7 bis 9, **dadurch gekennzeichnet, dass** die Führungseinheit (50) eine erste Walze (51) zum Platzieren in Kontakt mit dem ersten Beutelvorläufer (3A) und zum Führen desselben und eine zweite Walze (52) zum Platzieren in Kontakt mit dem zweiten Beutelvorläufer (3B) und zum Führen desselben umfasst, wobei jede Walze (51, 52) eine Längsachse parallel zum entsprechenden Beutelvorläufer (3A, 3B) definiert.

11. Schweißeinheit (1) nach Anspruch 10, **dadurch gekennzeichnet, dass** die Führungseinheit (50) ferner eine dritte Walze (53) zum Platzieren in Kontakt mit dem ersten Beutelvorläufer (3A) und zum Führen desselben umfasst, wobei eine Längsachse parallel zum ersten Beutelvorläufer (3A) definiert wird, und die schwenkbar um eine Schwenkachse parallel zur Längsachse der ersten Walze (51) angeordnet ist,
und dass die Führungseinheit (50) ferner eine vierte Walze (54) zum Platzieren in Kontakt mit dem zweiten Beutelvorläufer (3B) und zum Führen desselben umfasst, wobei eine Längsachse parallel zum zweiten Beutelvorläufer (3B) definiert wird, und die schwenkbar um eine Schwenkachse parallel zur Längsachse der zweiten Walze (52) angeordnet ist.

12. Schweißeinheit (1) nach einem der vorhergehenden Ansprüche, **dadurch gekennzeichnet, dass** sie mindestens einen zweiten Satz von ersten, zweiten, dritten und vierten Druckausübungsvorrichtungen (11, 21, 22, 31) umfasst.

13. Automatische Maschine zur Formung von flexiblen Beuteln, umfassend eine Schweißeinheit (1) nach einem der Ansprüche 1 bis 12.

14. Automatische Maschine zur Formung von flexiblen Beuteln nach Anspruch 13, **dadurch gekennzeichnet, dass** sie ferner Folgendes umfasst:
eine erste Abwickeleinheit zum Abwickeln eines ersten Bandes eines flexiblen heißsiegelfähigen Films in einer ersten Vorwärtsbewegungsrichtung;
eine erste Falteinheit des ersten Bandes, die dazu konfiguriert ist, das Band entlang mindestens einer ersten Faltlinie parallel zur ersten Vorwärtsbewegungsrichtung zu falten, wobei mindestens zwei Abschnitte des ersten Bandes auf gegenüberliegenden Seiten der mindestens einen ersten Faltlinie angeordnet sind und dieselbe Seite des ersten Bandes einander gegenüberliegend angeordnet ist;
eine zweite Abwickeleinheit zum Abwickeln eines zweiten Bandes eines flexiblen heißsiegelfähigen Films in einer zweiten Vorwärtsbewegungsrichtung; und
eine zweite Falteinheit des zweiten Bandes, die dazu konfiguriert ist, das Band entlang mindestens einer zweiten Faltlinie parallel zur zweiten Vorwärtsbewegungsrichtung zu falten, wobei mindestens zwei Abschnitte des zweiten Bandes auf gegenüberliegenden Seiten der mindestens einen zweiten Faltlinie angeordnet sind und dieselbe Seite des zweiten Bandes einander gegenüberliegend angeordnet ist.

15. Automatische Maschine zur Formung von flexiblen Beuteln nach Anspruch 14, **dadurch gekennzeichnet, dass** sie ferner mindestens eine Schneideinheit zum Abtrennen von Abschnitten umfasst, die flexible Beutel aus dem ersten und zweiten Band ausmachen.

## Revendications

1. Unité de soudage (1) destinée à une machine automatique de formation de sachet souple comprenant :
- des premier et deuxième applicateurs de pression (11, 21) se faisant face, formant ainsi un premier trajet pour un premier précurseur de sachet (3A) constitué d'une bande pliée de film souple thermoscellable,
- des moyens de chauffage chauffant au moins l'un desdits premier et deuxième applicateurs de pression (11, 21), et
- des moyens d'entraînement (40) pour déplacer au moins l'un desdits premier et deuxième applicateurs de pression (11, 21) entre une position de libération, dans laquelle le premier et deuxième applicateurs de pression (11, 21) sont séparés du premier trajet, et une position de soudage, dans laquelle le premier et deuxième applicateurs de pression (11, 21) pressent et appliquent de la chaleur sur le premier précurseur de sachet (3A) pour former une soudure,
**caractérisée en ce qu'**elle comprend :
un premier élément latéral (10) comprenant le premier applicateur de pression (11) ;
un élément central (20) comprenant le deuxième applicateur de pression (21) et un troisième applicateur de pression (22) sur des côtés opposés de celui-ci ;
un deuxième élément latéral (30) comprenant un quatrième applicateur de pression (31) faisant face au troisième applicateur de pression (22), formant ainsi un deuxième trajet pour un deuxième précurseur de sachet (3B) constitué d'une bande pliée de film souple thermoscellable ;
dans laquelle les moyens de chauffage chauffent également au moins l'un desdits troisième et quatrième applicateurs de pression (22, 31) ; et
dans laquelle au moins l'un desdits troisième et quatrième applicateurs de pression (22, 31) peuvent se déplacer entre une position de libération, dans laquelle le troisième et quatrième applicateurs de pression (22, 31) sont séparés du deuxième trajet, et une position de soudage, dans laquelle le troisième et quatrième applicateurs de pression (22, 31) pressent et appliquent de la chaleur sur le deuxième précurseur de sachet (3B) pour former une soudure ;
et dans laquelle au moins l'un du troisième et quatrième applicateurs de pression (22, 31) est opérationnellement relié auxdits moyens d'entraînement (40), de sorte qu'au moins l'un desdits premier et deuxième applicateurs de pression (11, 21) et au moins l'un desdits troisième et quatrième applicateurs de pression (22, 31) se déplacent simultanément de la position de libération vers la position de soudage, et vice versa.

2. Unité de soudage (1), selon la revendication 1, **caractérisée en ce que** les moyens d'entraînement (40) déplacent simultanément le premier élément latéral (10) et l'élément central (20) par rapport au deuxième élément latéral (30) pour déplacer le premier, deuxième, troisième et quatrième applicateurs de pression (11, 21, 22, 31) de la position de libération vers la position de soudage, et vice versa.

3. Unité de soudage (1), selon la revendication 1, **caractérisée en ce que** les moyens d'entraînement (40) déplacent simultanément le deuxième élément latéral (20) et l'élément central (20) par rapport au premier élément latéral (10) pour déplacer le premier, deuxième, troisième et quatrième applicateurs de pression (11, 21, 22, 31) de la position de libération vers la position de soudage, et vice versa.

4. Unité de soudage (1), selon la revendication 1, **caractérisée en ce que** les moyens d'entraînement déplacent simultanément le premier et deuxième éléments latéraux (10, 30) par rapport à l'élément central (20) pour déplacer le premier, deuxième, troisième et quatrième applicateurs de pression (11, 21, 22, 31) de la position de libération vers la position de soudage, et vice versa.

5. Unité de soudage (1), selon l'une quelconque des revendications précédentes, **caractérisée en ce que** le premier, deuxième, troisième et quatrième applicateurs de pression (11, 21, 22, 31) sont mutuellement alignés.

6. Unité de soudage (1), selon l'une quelconque des revendications précédentes, **caractérisée en ce qu'**elle comprend en outre au moins une unité de guidage (50) pour guider le premier et deuxième précurseurs de sachet (3A, 3B).

7. Unité de soudage (1), selon la revendication 6, **caractérisée en ce qu'**elle comprend au moins une unité de guidage (50) en amont des applicateurs de pression (11, 21, 22, 31) ; et au moins une unité de guidage (50) en aval des applicateurs de pression (11, 21, 22, 31).

8. Unité de soudage (1), selon la revendication 6 ou 7, dans laquelle le premier trajet du premier précurseur de sachet (3A) est séparé du deuxième trajet du deuxième précurseur de sachet (3B) par une première distance ; et dans laquelle l'unité de guidage (50) est configurée en outre pour garder ladite première distance et permettre de modifier au moins l'un dudit premier et dudit deuxième trajets de sorte qu'ils soient séparés par une deuxième distance.

9. Unité de soudage (1), selon la revendication 8, dans laquelle la deuxième distance est supérieure à la première distance.

10. Unité de soudage (1), selon l'une quelconque des revendications 7 à 9, **caractérisée en ce que** l'unité de guidage (50) comprend un premier rouleau (51) pour être placé en contact avec, et guider, le premier précurseur de sachet (3A) et un deuxième rouleau (52) pour être placé en contact avec, et guider, le deuxième précurseur de sachet (3B), chaque rouleau (51, 52) définissant un axe longitudinal parallèle au précurseur de sachet (3A, 3B) correspondant.

11. Unité de soudage (1), selon la revendication 10, **caractérisée en ce que** l'unité de guidage (50) comprend en outre un troisième rouleau (53) pour être placé en contact avec, et guider, le premier précurseur de sachet (3A), définissant un axe longitudinal parallèle au premier précurseur de sachet (3A), et étant disposé de manière pivotante autour d'un axe de pivot parallèle à l'axe longitudinal du premier rouleau (51) ;
et **en ce que** l'unité de guidage (50) comprend en outre un quatrième rouleau (54) pour être placé en contact avec, et guider, le deuxième précurseur de sachet (3B), définissant un axe longitudinal parallèle au deuxième précurseur de sachet (3B), et étant disposé de manière pivotante autour d'un axe de pivot parallèle à l'axe longitudinal du deuxième rouleau (52).

12. Unité de soudage (1), selon l'une quelconque des revendications précédentes, **caractérisée en ce qu'**elle comprend au moins un deuxième ensemble de premier, deuxième, troisième et quatrième applicateurs de pression (11, 21, 22, 31).

13. Machine automatique de formation de sachet souple comprenant une unité de soudage (1) selon l'une quelconque des revendications 1 à 12.

14. Machine automatique de formation de sachet souple, selon la revendication 13, **caractérisée en ce qu'**elle comprend en outre :
une première unité de déroulement pour dérouler une première bande d'un film souple thermoscellable dans une première direction de déplacement vers l'avant ;
une première unité de pliage de la première bande configurée pour plier ladite bande le long d'au moins une première ligne de pliage parallèle à la première direction de déplacement vers l'avant, au moins deux portions de la première bande étant disposées sur des côtés opposés de ladite au moins une première ligne de pliage et la même face de la première bande étant disposée en face l'une de l'autre ;
une deuxième unité de déroulement pour dérouler une deuxième bande d'un film souple thermoscellable dans une deuxième direction de déplacement vers l'avant ; et
une deuxième unité de pliage de la deuxième bande configurée pour plier ladite bande le long d'au moins une deuxième ligne de pliage parallèle à la deuxième direction de déplacement vers l'avant, au moins deux portions de la deuxième bande étant disposées sur des côtés opposés de ladite au moins une deuxième ligne de pliage et la même face de la deuxième bande étant disposée en face l'une de l'autre.

15. Machine automatique de formation de sachet souple, selon la revendication 14, **caractérisée en ce qu'**elle comprend en outre au moins une unité de coupe pour séparer des portions constituant des sachets souples à partir de la première et deuxième bandes.
